# FASCICULE DE BREVET EUROPEEN

(11) **EP 4 348 338 B1**
(45) Date de publication et mention de la délivrance du brevet: **21.05.2025**
(21) Numéro de dépôt: 22730289.0
(22) Date de dépôt: 25.05.2022
(51) Int. Cl.: G02B 27/01, G02B 27/00

(54) **AFFICHEUR TÊTE HAUTE**
HEAD-UP-ANZEIGE
HEAD-UP DISPLAY

(30) Priorité: 31.05.2021 FR 2105704
(43) Date de publication de la demande: 10.04.2024
(73) Titulaire: Valeo Comfort and Driving Assistance, 94000 Créteil (FR)
(72) Inventeur: HUSSON, Arnaud, 94000 Créteil (FR); MERMILLOD, Pierre, 94000 Créteil (FR)
(74) Mandataire: Delplanque, Arnaud
(86) Numéro de dépôt international: PCT/EP2022/064206
(87) Numéro de publication internationale: WO 2022/253666

(56) Documents cités:
- US-A1- 2019 187 475
- US-B1- 10 018 841
- US-B2- 10 852 627

## Description

La présente invention concerne de manière générale le domaine des afficheurs.

Elle concerne plus particulièrement un afficheur tête haute pour un véhicule automobile.

Pour le conducteur d'un véhicule automobile, il est particulièrement confortable de pouvoir visualiser des informations relatives au fonctionnement du véhicule, relatives à une voie de circulation faisant face au véhicule, ou autres, sans avoir pour cela à détourner son regard de cette voie de circulation.

Il est connu dans ce but d'équiper le véhicule automobile avec un afficheur dit « *tête haute* », comportant, à l'intérieur d'un boîtier, un système de génération d'images duquel émerge un faisceau lumineux source et un système optique de projection adapté pour projeter une image générée par le système de génération d'images vers l'extérieur, via le pare-brise par exemple, de manière à former une image virtuelle dans le champ de vision d'un conducteur dudit véhicule automobile.

L'image virtuelle, comportant les informations à afficher, se superpose alors visuellement à l'environnement faisant face au véhicule.

Il est connu également des afficheurs tête haute permettant la projection d'une double image virtuelle sur le pare-brise du conducteur. Dans ce cas de figure, la formation de la double image virtuelle peut être réalisée à des distances de projection différentes à partir d'un ou plusieurs faisceaux lumineux source combinés à plusieurs systèmes optiques de projection.

Or, dans ce cas, si plusieurs voies d'imagerie, chacune constituée par l'association d'un faisceau lumineux source à un système optique de projection, sont ainsi créées de manière indépendante en produisant chacune respectivement une image virtuelle, il peut se produire des phénomènes d'imagerie croisée (« crosstalk » en anglais). Ces phénomènes proviennent du passage d'une portion d'un ou plusieurs faisceaux lumineux source à travers un système optique de projection qui lui ou leur n'est pas associé, créant ainsi une ou plusieurs images redondantes et parasites. Ces phénomènes d'imagerie croisée doivent être évités.

Afin de remédier à ce problème, la présente invention propose un afficheur tête haute comportant, à l'intérieur d'un boîtier :
- un système de génération d'images ;
- un premier système optique de projection comprenant un premier miroir et un second système optique de projection comprenant un second miroir ;

le boîtier comportant une ouverture fermée par une fenêtre transparente ;
caractérisé en ce que :
   - le système de génération d'images est adapté pour émettre un premier faisceau lumineux source et un second faisceau lumineux source distincts spatialement l'un de l'autre ;
   - le premier système optique de projection et ledit second système optique de projection sont adaptés pour projeter respectivement lesdits premier faisceau lumineux source et second faisceau lumineux source vers l'extérieur à travers ladite fenêtre transparente, de manière à former une première image virtuelle à une première distance de projection et une seconde image virtuelle à une seconde distance de projection dans le champ de vision d'un conducteur dudit véhicule automobile ;
   - le second système optique de projection est adapté pour être traversé par un second faisceau lumineux intermédiaire issu du second faisceau lumineux source ;
   - le premier miroir est apte, d'une part, à intercepter une portion du second faisceau lumineux intermédiaire, et d'autre part, à réfléchir ladite portion en une portion réfléchie ;
   - l'afficheur tête-haute comporte une pièce d'occultation interposée entre le premier miroir et la fenêtre transparente, et adaptée pour arrêter ladite portion réfléchie.

Avantageusement, la première distance de projection et la seconde distance de projection sont distinctes.

De préférence, la première distance de projection est supérieure à la seconde distance de projection.

La première distance de projection est par exemple supérieure à 8 mètres.

La première distance de projection est par exemple inférieure à 15 mètres.

De préférence, la première distance de projection est comprise entre 8 et 15 mètres, et ici, entre 10 et 12 mètres.

La seconde distance de projection est par exemple supérieure à 1 mètre.

La seconde distance de projection est par exemple inférieure à 5 mètres.

De préférence, la seconde distance de projection est comprise entre 1 et 5 mètres, et ici, entre 2 et 3 mètres.

De préférence, la première image virtuelle est de dimensions supérieures aux dimensions de la seconde image virtuelle.

Dans un mode de réalisation, l'afficheur tête-haute comprend en outre une pièce de séparation disposée entre le premier faisceau lumineux source et le second faisceau lumineux source.

Dans ce mode de réalisation, le premier système optique de projection est adapté pour être traversé par un premier faisceau lumineux intermédiaire issu du premier faisceau lumineux source. La pièce de séparation, quant à elle, arrête au moins une portion du premier faisceau lumineux intermédiaire incidente sur le second miroir.

Dans un mode de réalisation, la pièce d'occultation est mobile.

Dans une première variante dudit mode de réalisation, l'afficheur tête haute comprend en outre un premier système de commande et la pièce d'occultation est entraînée par un moteur. Le premier système de commande peut alors comprendre : un dispositif d'acquisition, adapté pour déterminer la position des yeux d'un conducteur du véhicule automobile ; une unité de traitement électronique reliée au dispositif d'acquisition et adaptée pour calculer une position de la pièce d'occultation ; un système d'asservissement adapté pour asservir le déplacement du moteur à une consigne relative à la position calculée par l'unité de traitement électronique.

Dans cette variante, des moyens de réglage sont configurés pour modifier l'inclinaison du second miroir. L'unité de traitement électronique est alors également adaptée pour calculer une inclinaison optimale du second miroir. Le système d'asservissement est également adapté pour asservir l'actionnement des moyens de réglage à une consigne préalable relative à l'inclinaison optimale calculée par l'unité de traitement électronique.

Dans une deuxième variante dudit mode de réalisation, l'afficheur tête haute comprend en outre un second système de commande, la pièce d'occultation est entraînée par un moteur, et l'inclinaison du second miroir est réglable (manuellement). Le second système de commande peut comprendre : une unité de traitement électronique adaptée pour recevoir des informations relatives à l'inclinaison du second miroir et pour calculer une position de la pièce d'occultation ; un système d'asservissement adapté pour asservir le déplacement du moteur à une consigne relative à la position calculée par l'unité de traitement électronique.

Dans une troisième variante dudit mode de réalisation, l'inclinaison du second miroir est réglable (manuellement) et la position de la pièce d'occultation est réglable (manuellement).

Par ailleurs, la pièce d'occultation est de préférence située à une distance inférieure à un centimètre de la fenêtre transparente.

Par exemple, la pièce d'occultation est située à une distance comprise entre 1 mm et 3 mm de la fenêtre transparente.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] est une vue schématique montrant l'intégration d'un afficheur tête-haute selon l'invention dans un véhicule automobile.
[Fig. 2] est une vue de détail d'un mode de réalisation de l'afficheur tête haute de la figure 1 montrant une partie du trajet des rayons lumineux issus du système de génération d'images à travers l'afficheur tête haute.
[Fig. 3] est une vue agrandie d'une pièce de séparation.
[Fig. 4] est une vue agrandie d'une pièce d'occultation à deux positions différentes.
[Fig. 5] est une représentation schématique d'un mode de réalisation du système de commande de déplacement de la pièce d'occultation.

Il est à noter que sur ces figures les éléments structurels et/ou fonctionnels communs aux différentes variantes peuvent présenter les mêmes références.

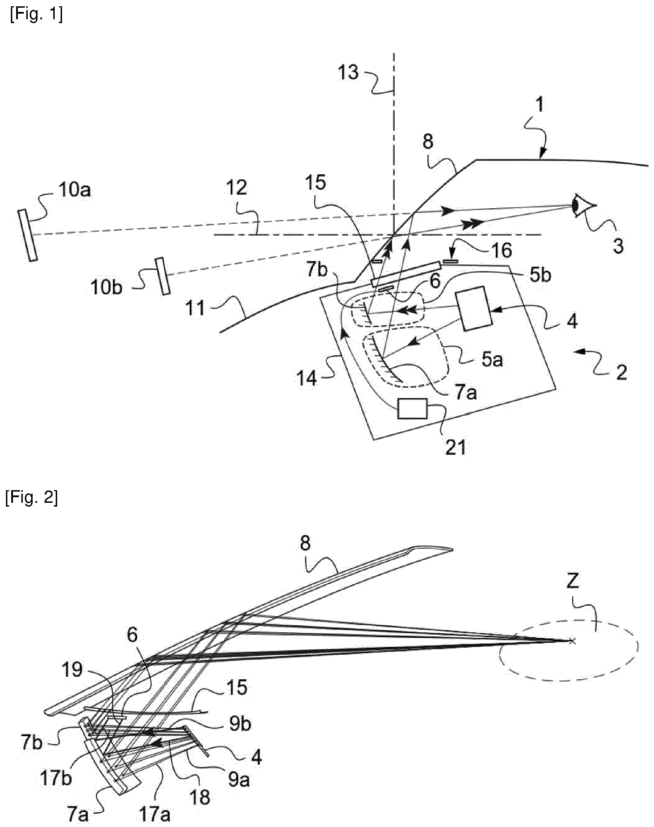

La figure 1 représente schématiquement, de côté, un véhicule automobile 1, équipé d'un afficheur tête haute 2 selon l'invention. Un individu, ici le conducteur 3, est situé dans l'habitacle du véhicule.

L'afficheur 2 comporte tout d'abord un boîtier 14 généralement placé sous une planche de bord 16 du véhicule 1 et ayant, ici dans sa partie supérieure proche de la planche de bord 16, une ouverture fermée par une fenêtre transparente 15 adaptée pour laisser passer les différents faisceaux lumineux utiles au fonctionnement de l'afficheur, comme expliqué dans la suite.

Comme le montre la figure 1, l'afficheur tête haute 2 comprend, à l'intérieur de ce boîtier 14, un système de génération d'images 4 générant deux images spatialement distinctes, un premier système optique de projection 5a et un second système optique de projection 5b, une pièce d'occultation 6 et un système de commande 21 de déplacement de la pièce d'occultation.

Le système de génération d'images 4 peut consister en une unique unité de génération d'images ou en deux unités de génération d'images.

La ou les unités de génération d'images peuvent être par exemple de type écran à cristaux liquides rétroéclairé par une source lumineuse. Elles peuvent être également de type écran de diffusion rétroéclairé par une source lumineuse, équipé à l'arrière d'un système de balayage. Elles peuvent être encore de type diffuseur optique rétroéclairé par un faisceau. Par exemple, le faisceau peut provenir d'un écran à cristaux liquides sur silicium (en anglais, Liquid crystal on silicon ou LCoS). Dans ce cas, une configuration particulière est un système holographique, où le faisceau provenant de l'écran LCoS subit une transformée de Fourier avant d'atteindre le diffuseur optique. L'écran LCoS peut être par exemple rétroéclairé par une diode laser.

Le système de génération d'images 4 émet un premier faisceau lumineux source 9a ainsi qu'un second faisceau lumineux source 9b. Le premier faisceau lumineux source 9a et le second faisceau lumineux source 9b sont spatialement distincts. Cependant, ils peuvent présenter des zones de recouvrement.

Dans le cas où le système de génération d'images 4 consiste en deux unités de génération d'images séparées, celles-ci peuvent être positionnées l'une en dessous de l'autre, selon une direction verticale (voir fig. 1). La direction horizontale 12 peut être définie comme étant la direction qui est sensiblement parallèle à la route sur laquelle le véhicule circule. En d'autres termes, on pourrait dire que la direction horizontale est la direction de la vitesse instantanée du véhicule se déplaçant sur la route. La direction verticale 13 peut être alors définie comme étant perpendiculaire à la direction horizontale.

Les images générées par le système de génération d'images le sont en fonction d'un signal de commande provenant de l'ordinateur de bord (non représenté) du véhicule 1.

Le premier système optique de projection 5a et le second système optique de projection 5b projettent respectivement le premier faisceau lumineux source 9a et le second faisceau lumineux source 9b vers l'extérieur via la fenêtre transparente 15 du boîtier 14 de manière à former respectivement une première image virtuelle 10a à une première distance de projection et une seconde image virtuelle 10b à une seconde distance de projection.

Par exemple, la première image virtuelle 10a est située au-dessus de la seconde image virtuelle 10b selon la direction verticale 13.

Par exemple, la première image virtuelle 10a est de dimensions supérieures à celles de la seconde image virtuelle 10b.

On appellera premier faisceau lumineux intermédiaire 17a le faisceau lumineux issu du premier faisceau lumineux source 9a et traversant le premier système optique de projection 5a, puis traversant la fenêtre transparente 15. De même, on appellera second faisceau lumineux intermédiaire 17b le faisceau lumineux issu du second faisceau lumineux source 9b et traversant le second système optique de projection 5b, puis traversant la fenêtre transparente 15.

Le premier faisceau lumineux intermédiaire 17a et le second faisceau lumineux intermédiaire 17b sont projetés vers une lame partiellement transparente 8. La lame partiellement transparente 8 réfléchit le premier faisceau lumineux intermédiaire 17a et le second faisceau lumineux intermédiaire 17b en direction du conducteur 3. Celui-ci voit alors l'image virtuelle projetée par le premier faisceau lumineux source 9a et l'image virtuelle projetée par le second faisceau lumineux source 9b, et formées par réflexion sur la lame partiellement transparente 8. Le trajet des rayons lumineux composant le premier faisceau lumineux intermédiaire 17a et le second faisceau lumineux intermédiaire 17b est illustré sur la figure 2.

Ici, la lame partiellement transparente 8 est le pare-brise du véhicule 1. En variante toutefois, la lame partiellement transparente 8 pourrait être un combineur dédié, par exemple situé entre le pare-brise du véhicule et la fenêtre transparente 15 du boîtier de l'afficheur tête haute 2.

Dans le mode de réalisation représenté sur la figure 2, le premier système optique de projection 5a comprend un premier miroir 7a et le second système optique de projection 5b comprend un second miroir 7b.

Le premier miroir 7a réfléchit le premier faisceau lumineux intermédiaire 17a. Ce premier miroir 7a est convergent de manière, après réflexion par le pare-brise 8, à former la première image virtuelle 10a à une distance donnée en avant de l'afficheur 2 (à une distance donnée du pare-brise 8, du côté du pare-brise 9 opposé au conducteur 3), devant le capot 11 du véhicule 1. Cette distance peut par exemple être comprise entre 8 mètres et 15 mètres, et ici, entre 10 mètres et 12 mètres.

De même, le second miroir 7b réfléchit le second faisceau lumineux intermédiaire 17b. Ce second miroir 7b est convergent de manière, après réflexion par le pare-brise 8, à former la seconde image virtuelle 10b à une distance donnée en avant de l'afficheur 2 (à une distance donnée du pare-brise 8, du côté du pare-brise 8 opposé au conducteur 3), devant le capot 11 du véhicule 1. Cette distance peut par exemple être comprise entre 1 mètre et 5 mètres, et ici, entre 2 mètres et 3 mètres.

Le premier miroir 7a peut par exemple être situé en dessous du second miroir 7b selon la direction verticale 13 définie précédemment, de sorte que la première image virtuelle 10a, soit visible au-dessus de la seconde image virtuelle 10b.

De manière avantageuse, le premier miroir 7a et le second miroir 7b sont courbes, par exemple optimisés de manière à augmenter respectivement le grossissement du premier système optique de projection 5a et celui du second système optique de projection 5b et/ou compenser les distorsions ou les aberrations optiques qui pourraient être causées par la réflexion sur le pare-brise 8. Par exemple, le premier miroir 7a et le second miroir 7b peuvent être de type asphérique, ou de forme polynomiale.

En variante, le premier système optique de projection 5a et le second système optique de projection 5b pourraient comprendre chacun un ou plusieurs miroirs plans disposés sur le trajet du premier faisceau lumineux intermédiaire 17a et du second faisceau lumineux intermédiaire 17b. Ces miroirs permettraient de replier le trajet, suivi par le premier 17a, respectivement, le second 17b, faisceau lumineux intermédiaire entre le système de génération d'images 4 et le pare-brise 8. La distance séparant, le long de ce trajet, le système de génération d'images 4 et le pare-brise 8, s'en trouve augmentée, ce qui permettrait d'ajuster la première distance de projection et la seconde distance de projection tout en conservant un volume réduit pour l'afficheur 2.

Comme illustré sur la figure 2, le premier miroir 7a intercepte une portion 18 du second faisceau lumineux intermédiaire 17b et réfléchit celle-ci en une portion réfléchie 19. Cette portion réfléchie 19 pourrait créer une image virtuelle redondante issue du second faisceau lumineux source 9b pouvant parasiter le champ de vision du conducteur 3. Il s'agit du phénomène d'imagerie croisée évoqué précédemment.

Comme indiqué plus haut, l'afficheur 2 comporte en outre une pièce d'occultation 6. Comme illustré sur la figure 2, la pièce d'occultation 6 est interposée entre le premier miroir 7a et la fenêtre transparente 15 du boîtier 14, de sorte à occulter la portion réfléchie 19. De cette manière, la formation d'une image virtuelle redondante issue du second faisceau lumineux source 9b est évitée. La pièce d'occultation 6 peut par exemple être située sous la fenêtre transparente 15 du boîtier 14, à une distance de la fenêtre transparente 15 inférieure à 1 cm, par exemple entre 1 mm et 3 mm.

La pièce d'occultation 6 est par exemple rectangulaire, en variante elle peut être éventuellement modifiée pour éviter les phénomènes de vignettage de la première image virtuelle 10a et la seconde image virtuelle 10b.

Avantageusement, la pièce d'occultation 6 est un absorbant optique, telle qu'une plaque de couleur noire matte. Ceci permet de limiter toute lumière parasite dans le champ de vision du conducteur 3.

Avantageusement, afin de supprimer toute image parasite issue du premier faisceau lumineux source 9a ou du second faisceau lumineux source 9b (ici du premier faisceau lumineux source 9a) dans le champ de vision du conducteur 3, qui correspond aussi à un phénomène d'imagerie croisée, une pièce de séparation 20 peut être disposée entre le premier faisceau lumineux source 9a et le second faisceau lumineux source 9b.

Plus précisément, et dans l'exemple décrit ici, la pièce de séparation 20 occulte l'un de l'autre le premier faisceau lumineux source 9a et le second faisceau lumineux source 9b. La pièce de séparation 20 arrête au moins une partie des rayons issus du premier faisceau lumineux source 9a qui risqueraient d'atteindre le second système optique de projection 5b. Cette partie arrêtée ne traverse donc pas le second système optique de projection 5b et n'est donc pas projetée à travers celui-ci, ne traversant pas a fortiori la fenêtre transparente 15 ni n'étant réfléchie par le pare-brise 8.

Ainsi, grâce à la pièce de séparation 20, une image virtuelle projetée par le premier faisceau optique source 9a à travers le second système optique de projection 5b est donc au moins en partie éliminée. En d'autres termes, son étendue spatiale dans le champ de vision du conducteur 3 est réduite.

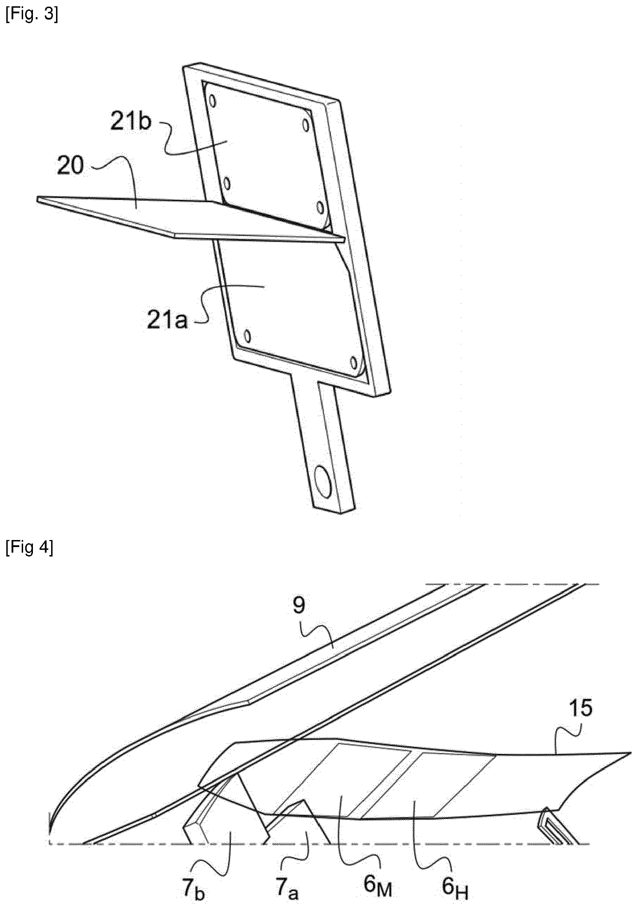

La finition de la pièce de séparation 20 peut être réalisée afin de limiter tout phénomène de vignettage de la première image virtuelle 10a ou de la seconde image virtuelle 10b, par exemple par chanfreinage. Une telle pièce de séparation 20 est représentée à la figure 3, dans le cas où le système de génération d'images comprend un premier diffuseur optique 21a diffusant le premier faisceau lumineux source 9a et un second diffuseur optique 21b diffusant le second faisceau lumineux source 9b. Le couplage de la pièce d'occultation 6 et de la pièce de séparation 20 permet une élimination totale des phénomènes d'imagerie croisée dans l'afficheur tête-haute 2 selon l'invention.

Il est à noter que l'orientation et la forme du premier faisceau lumineux intermédiaire 17a et du second faisceau lumineux intermédiaire 17b, lesquels créent l'image virtuelle 10a, l'image virtuelle 10b et la possible image redondante issue du second faisceau lumineux source 9b, varient en fonction de la position des yeux du conducteur dans l'ensemble des lieux où peuvent se trouver ceux-ci en situation de conduite. On appellera l'ensemble de ces lieux zone oculaire Z (en anglais « eye box »).

En situation de conduite, la zone oculaire Z peut être modélisée par un ellipsoïde tridimensionnel, afin de tenir compte des mouvements des yeux avant-arrière le long de la direction horizontale, de haut en bas le long de la direction verticale, et de gauche à droite dans un plan perpendiculaire au plan formé par les directions horizontale 12 et verticale 13.

En pratique, on considère que la zone oculaire Z est un parallélépipède. Par exemple, les dimensions verticale et horizontale de la zone oculaire Z peuvent être de 120 mm par 120 mm.

Afin de rendre possible l'élimination par la pièce d'occultation 6 de l'image redondante issue du second faisceau lumineux source 9b pour des conducteurs de tailles différentes, on propose ici d'adapter la position de la pièce d'occultation 6 à la position des yeux du conducteur 3 à l'intérieur de la zone oculaire Z.

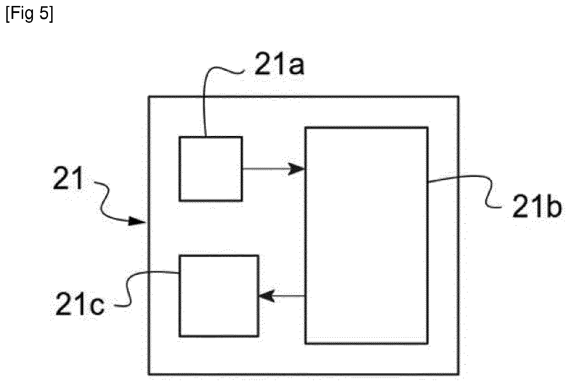

Ainsi, avantageusement, la pièce d'occultation 6 est mobile, par exemple en étant entraînée par un moteur (non représenté) permettant son déplacement. Ce déplacement peut typiquement être effectué d'avant en arrière (selon la direction horizontale 12 définie précédemment) et réciproquement, sur une plage par exemple de l'ordre de 50 à 60 mm. La position de la pièce d'occultation 6 peut dans ce cas être commandée par un premier système de commande 21 illustré de manière schématique à la [Fig. 5].

Le premier système de commande comprend un dispositif d'acquisition 21a, une unité de traitement électronique 21b reliée au dispositif d'acquisition 21a, un système d'asservissement 21c permettant de commander le déplacement du moteur en fonction d'une consigne calculée par l'unité de traitement 21b. Le dispositif d'acquisition 21a est par exemple une caméra.

La caméra 21a enregistre en temps réel la position des yeux du conducteur 3. Le signal enregistré par la caméra 21a est reçu (ici continûment) par l'unité de traitement électronique 21b du premier système de commande 21.

Celle-ci calcule la position de la pièce d'occultation 6 correspondant à l'occultation optimale de la portion réfléchie 19 par le premier miroir 7a, à partir de l'orientation et la forme du premier faisceau lumineux intermédiaire 17a et du second faisceau lumineux intermédiaire 17b réfléchis via le pare-bise 8 vers les yeux du conducteur 3 dans la position enregistrée par la caméra 21a. Les calculs peuvent être effectués au préalable pour un ensemble de positions des yeux du conducteur 3, pour une position déterminée du second miroir 7b, et la position de la pièce d'occultation pour une position des yeux est alors mémorisée dans une table de correspondance (par exemple mémorisée dans l'unité de traitement électronique 21b).

L'unité de traitement électronique 21b génère ensuite une consigne envoyée au système d'asservissement 21c du moteur. Le système d'asservissement 21c déclenche alors le déplacement du moteur pour positionner la pièce d'occultation 6 à la position calculée par l'unité de traitement électronique 21b.

Ainsi, l'image virtuelle redondante issue du second faisceau lumineux source 9b est (ici continûment) absente du champ de vision du conducteur 3, par l'utilisation d'un tel système d'oculométrie (« eyetracking » en anglais).

La [Fig. 4] représente la pièce d'occultation 6 à deux positions différentes 6M et 6H, pour des positions des yeux respectivement à des hauteurs milieu et haute de la zone oculaire Z.

Avantageusement, le second miroir 7b du second système optique de projection 5b est inclinable, par exemple par l'actionnement de moyens de réglage. Les moyens de réglage sont par exemple un système motorisé entraînant en rotation le second miroir 7b. Le système d'asservissement 21c permet alors également de commander l'actionnement du système motorisé entraînant le second miroir 7b afin de régler l'inclinaison de celui-ci.

Dans ce cas, suite à la réception du signal enregistré par la caméra 21a relatif à la position des yeux du conducteur 3, l'unité de traitement électronique 21b calcule une inclinaison optimale du second miroir 7b permettant d'optimiser la position de la seconde image virtuelle 10b en fonction de la position des yeux enregistrée.

L'unité de traitement électronique 21b génère ensuite, préalablement au déclenchement du déplacement du moteur entraînant la pièce mobile 6, une consigne préalable envoyée au système d'asservissement 21c. Le système d'asservissement 21c déclenche alors le changement d'inclinaison du second miroir 7b par l'intermédiaire de l'actionnement du système motorisé entraînant le second miroir 7b.

Puis, l'unité de traitement électronique 21b calcule, pour l'inclinaison optimale calculée, la position optimale de la pièce mobile 6. Ce calcul est effectué à partir de l'orientation et la forme du premier faisceau lumineux intermédiaire 17a et du second faisceau lumineux intermédiaire 17b, réfléchis via le pare-bise 8 vers les yeux du conducteur 3 dans la position enregistrée par la caméra 21a. Ces orientations et formes sont reliées à l'inclinaison optimale calculée du second miroir 7b
L'unité de traitement 21b génère ensuite une consigne envoyée au système d'asservissement 21c afin de déplacer le moteur entraînant la pièce d'occultation 6 comme décrit précédemment. Le système d'asservissement 21c déclenche alors le déplacement du moteur entraînant la pièce d'occultation 6.

Egalement, les calculs peuvent être effectués au préalable pour un ensemble d'inclinaisons du second miroir 7b. La position de la pièce d'occultation 6 est alors mémorisée dans une table de correspondance (par exemple dans l'unité de traitement électronique 21b).

Dans une première variante n'utilisant pas de système d'oculométrie, la position de la pièce d'occultation 6 peut être commandée par un second système de commande 22 (non représenté) différent du premier système de commande 21. Dans ce cas, la pièce d'occultation 6 est toujours entraînée par un moteur permettant son déplacement. Le second miroir 7b du second système optique de projection 5b est, par exemple, inclinable manuellement par le conducteur 3, ce qui permet à ce dernier d'optimiser la position de la seconde image virtuelle 10b en fonction de la position de ses yeux.

Le second système de commande 22 comprend une unité de traitement électronique 22b recevant des informations relatives à l'inclinaison du second miroir 7b ainsi qu'un système d'asservissement 22c permettant de commander le déplacement du moteur en fonction d'une consigne calculée par l'unité de traitement électronique 22b.

L'unité de traitement électronique 22b calcule la position de la pièce d'occultation 6 correspondant à l'occultation optimale de la portion réfléchie 19 par le premier miroir 7a, à partir des informations relatives à l'inclinaison du second miroir 7b et de l'orientation et la forme du premier faisceau lumineux intermédiaire 17a et du second faisceau lumineux intermédiaire 17b qui en résultent. Là encore, les calculs peuvent être effectués au préalable pour un ensemble d'inclinaisons du second miroir 7b et la position de la pièce d'occultation pour une inclinaison du second miroir 7b est alors mémorisée dans une table de correspondance (par exemple dans l'unité de traitement électronique 22b).

De la même manière qu'avec le système d'oculométrie, l'unité de traitement électronique 22b génère ensuite une consigne envoyée au système d'asservissement 22c du moteur. Le système d'asservissement 22c déclenche alors le déplacement du moteur pour positionner la pièce d'occultation 6 à la position calculée par l'unité de traitement électronique 22b.

Dans une seconde variante n'utilisant ni système d'oculométrie ni système de commande, une solution totalement manuelle peut être envisagée. La pièce d'occultation 6 est toujours mobile d'avant en arrière (suivant la direction horizontale 12), par exemple par un système de coulissement. Le second miroir 7b du second système optique de projection 5b est, par exemple, inclinable manuellement par le conducteur 3, afin d'optimiser la position de la second image virtuelle 10b en fonction de la position de ses yeux. Le conducteur 3 déplace alors manuellement la pièce d'occultation 6 afin de maximiser l'élimination de l'image virtuelle redondante issue du second faisceau lumineux source 9b.

## Revendications

1. Afficheur tête haute (2) pour un véhicule automobile (1) comportant, à l'intérieur d'un boîtier (14) :
- un système de génération d'images (4) ;
- un premier système optique de projection (5a) comprenant un premier miroir (7a) et un second système optique de projection (5b) comprenant un second miroir (7b) ;
le boîtier (14) comportant une ouverture fermée par une fenêtre transparente (15) ;
**caractérisé en ce que** :
- ledit système de génération d'images (4) est adapté pour émettre un premier faisceau lumineux source (9a) et un second faisceau lumineux source (9b) distincts spatialement l'un de l'autre ;
- ledit premier système optique de projection (5a) et ledit second système optique de projection (5b) sont adaptés pour projeter respectivement lesdits premier faisceau lumineux source (9a) et second faisceau lumineux source (9b) vers l'extérieur à travers ladite fenêtre transparente (15), de manière à former une première image virtuelle (10a) à une première distance de projection et une seconde image virtuelle (10b) à une seconde distance de projection dans le champ de vision d'un conducteur (3) dudit véhicule automobile (1) ;
- ledit second système optique de projection (5b) est adapté pour être traversé par un second faisceau lumineux intermédiaire (17b) issu du second faisceau lumineux source (9b) ;
- le premier miroir (7a) est apte, d'une part, à intercepter une portion (18) du second faisceau lumineux intermédiaire (17b), et d'autre part, à réfléchir ladite portion (18) en une portion réfléchie (19) ;
- l'afficheur tête-haute (2) comporte une pièce d'occultation (6) interposée entre le premier miroir (7a) et la fenêtre transparente (15), et adaptée pour arrêter ladite portion réfléchie (19).

2. Afficheur tête-haute (2) selon la revendication 1, dans lequel la première distance de projection et la seconde distance de projection sont distinctes.

3. Afficheur tête-haute (2) selon la revendication 2, dans lequel la première image virtuelle (10a) est de dimensions supérieures aux dimensions de la seconde image virtuelle (10b) et la première distance de projection est supérieure à la seconde distance de projection.

4. Afficheur tête haute (2) selon l'une quelconque des revendications précédentes, comprenant en outre une pièce de séparation (20) disposée entre le premier faisceau lumineux source (9a) et le second faisceau lumineux source (9b).

5. Afficheur tête haute (2) selon la revendication 4, dans lequel :
- ledit premier système optique de projection (5a) est adapté pour être traversé par un premier faisceau lumineux intermédiaire (17a) issu du premier faisceau lumineux source (9a) ;
- la pièce de séparation (20) arrête au moins une portion du premier faisceau lumineux intermédiaire (17a) orientée en direction du second miroir (7b).

6. Afficheur tête-haute selon l'une quelconque des revendications précédentes, dans lequel la pièce d'occultation (6) est mobile.

7. Afficheur tête haute (2) selon la revendication 6, comprenant en outre un premier système de commande (21) et dans lequel :
- la pièce d'occultation (6) est entraînée par un moteur ;
- ledit premier système de commande (21) comprend :
∘ un dispositif d'acquisition (21a) adapté pour déterminer la position des yeux d'un conducteur (3) du véhicule automobile (1)
∘ une unité de traitement électronique (21b) reliée au dispositif d'acquisition (21a) et adaptée pour calculer une position de la pièce d'occultation (6)
∘ un système d'asservissement (21c) adapté pour asservir le déplacement du moteur à une consigne relative à la position calculée par l'unité de traitement électronique (21b)

8. Afficheur tête haute selon la revendication 7, dans lequel :
- des moyens de réglage sont configurés pour modifier l'inclinaison du second miroir (7b) ;
- l'unité de traitement électronique (21b) est en outre adaptée pour calculer une inclinaison optimale du second miroir (7b) ;
- le système d'asservissement (21c) est en outre adapté pour asservir l'actionnement desdits moyens de réglage à une consigne préalable relative à l'inclinaison optimale calculée par l'unité de traitement électronique (21b).

9. Afficheur tête haute (2) selon la revendication 6, comprenant en outre un second système de commande (22) et dans lequel :
- la pièce d'occultation (6) est entraînée par un moteur ;
- l'inclinaison du second miroir (7b) est réglable manuellement ;
- ledit second système de commande (22) comprend :
- une unité de traitement électronique (22b) adaptée pour recevoir des informations relatives à l'inclinaison du second miroir (7b) et pour calculer une position de la pièce d'occultation (6) ;
- un système d'asservissement (22c) adapté pour asservir le déplacement du moteur à une consigne relative à la position calculée par l'unité de traitement électronique (22b).

10. Afficheur tête haute (2) selon la revendication 6, dans lequel :
- l'inclinaison du second miroir (7b) est réglable manuellement ;
- la position de la pièce d'occultation (6) est réglable manuellement.

11. Afficheur tête haute (2) selon l'une quelconque des revendications précédentes, dans lequel la pièce d'occultation est située à moins d'un centimètre de la fenêtre transparente (15).

## Patentansprüche

1. Head-up-Display (2) für ein Kraftfahrzeug (1), das innerhalb eines Gehäuses (14) beinhaltet:
- ein Bilderzeugungssystem (4);
- ein erstes optisches Projektionssystem (5a), das einen ersten Spiegel (7a) umfasst, und ein zweites optisches Projektionssystem (5b), das einen zweiten Spiegel (7b) umfasst;
wobei das Gehäuse (14) eine Öffnung beinhaltet, die durch ein transparentes Fenster (15) verschlossen wird;
**dadurch gekennzeichnet, dass**:
- das Bilderzeugungssystem (4) dazu angepasst ist, einen ersten Quellenlichtstrahl (9a) und einen zweiten Quellenlichtstrahl (9b) zu emittieren, die räumlich voneinander verschieden sind;
- das erste optische Projektionssystem (5a) und das zweite optische Projektionssystem (5b) dazu angepasst sind, den ersten Quellenlichtstrahl (9a) und den zweiten Quellenlichtstrahl (9b) nach außerhalb durch das transparente Fenster (15) hindurch zu projizieren, so dass ein erstes virtuelles Bild (10a) in einem ersten Projektionsabstand und ein zweites virtuelles Bild (10b) in einem zweiten Projektionsabstand in dem Sichtfeld eines Fahrers (3) des Kraftfahrzeugs (1) gebildet werden;
- das zweite optische Projektionssystem (5b) dazu angepasst ist, von einem zweiten Zwischenlichtstrahl (17b) durchquert zu werden, der aus dem zweiten Quellenlichtstrahl (9b) hervorgegangen ist;
- der erste Spiegel (7a) zum einen geeignet ist, einen Anteil (18) des zweiten Zwischenlichtstrahls (17b) aufzufangen, und zum anderen, den Anteil (18) in einen reflektierten Anteil (19) zu reflektieren;
- das Head-up-Display (2) ein Blendenteil (6) beinhaltet, das zwischen den ersten Spiegel (7a) und das transparente Fenster (15) gesetzt ist und dazu angepasst ist, den reflektierten Anteil (19) zu stoppen.

2. Head-up-Display (2) nach Anspruch 1, bei dem der erste Projektionsabstand und der zweite Projektionsabstand verschieden sind.

3. Head-up-Display (2) nach Anspruch 2, bei dem das erste virtuelle Bild (10a) Abmessungen hat, die größer als die Abmessungen des zweiten virtuellen Bildes (10b) sind, und der erste Projektionsabstand größer als der zweite Projektionsabstand ist.

4. Head-up-Display (2) nach einem der vorhergehenden Ansprüche, das ferner ein Trennteil (20) umfasst, das zwischen dem ersten Quellenlichtstrahl (9a) und dem zweiten Quellenlichtstrahl (9b) angeordnet ist.

5. Head-up-Display (2) nach Anspruch 4, bei dem:
- das erste optische Projektionssystem (5a) dazu angepasst ist, von einem ersten Zwischenlichtstrahl (17a) durchquert zu werden, der aus dem ersten Quellenlichtstrahl (9a) hervorgegangen ist;
- das Trennteil (20) mindestens einen Anteil des ersten Zwischenlichtstrahls (17a), der in Richtung des zweiten Spiegels (7b) ausgerichtet ist, stoppt.

6. Head-up-Display nach einem der vorhergehenden Ansprüche, bei dem das Blendenteil (6) beweglich ist.

7. Head-up-Display (2) nach Anspruch 6, das ferner ein erstes Steuerungssystem (21) umfasst und bei dem:
- das Blendenteil (6) von einem Motor angetrieben wird;
- das erste Steuerungssystem (21) umfasst:
∘ eine Erfassungsvorrichtung (21a), die dazu angepasst ist, die Position der Augen eines Fahrers (3) des Kraftfahrzeugs (1) zu bestimmen
∘ eine elektronische Verarbeitungseinheit (21b), die mit der Erfassungseinheit (21a) verbunden ist und dazu angepasst ist, eine Position des Blendenteils (6) zu berechnen
∘ ein Ansteuerungssystem (21c), das dazu angepasst ist, die Bewegung des Motors anhand eines Sollwerts bezüglich der von der elektronischen Verarbeitungseinheit (21b) berechneten Position anzusteuern.

8. Head-up-Display nach Anspruch 7, bei dem:
- Einstellmittel dazu ausgestaltet sind, die Neigung des zweiten Spiegels (7b) zu ändern;
- die elektronische Verarbeitungseinheit (21b) ferner dazu angepasst ist, eine optimale Neigung des zweiten Spiegels (7b) zu berechnen;
- das Ansteuerungssystem (21c) ferner dazu angepasst ist, die Betätigung der Einstellmittel anhand eines vorherigen Sollwerts bezüglich der von der elektronischen Verarbeitungseinheit (21b) berechneten optimalen Neigung anzusteuern.

9. Head-up-Display (2) nach Anspruch 6, das ferner ein zweites Steuerungssystem (22) umfasst und bei dem:
- das Blendenteil (6) von einem Motor angetrieben wird;
- die Neigung des zweiten Spiegels (7b) manuell einstellbar ist;
- das zweite Steuerungssystem (22) umfasst:
- eine elektronische Verarbeitungseinheit (22b), die dazu angepasst ist, Informationen bezüglich der Neigung des zweiten Spiegels (7b) zu empfangen und eine Position des Blendenteils (6) zu berechnen;
- ein Ansteuerungssystem (22c), das dazu angepasst ist, die Bewegung des Motors anhand eines Sollwerts bezüglich der von der elektronischen Verarbeitungseinheit (22b) berechneten Position anzusteuern.

10. Head-up-Display (2) nach Anspruch 6, bei dem:
- die Neigung des zweiten Spiegels (7b) manuell einstellbar ist;
- die Position des Blendenteils (6) manuell einstellbar ist.

11. Head-up-Display (2) nach einem der vorhergehenden Ansprüche, bei dem das Blendenteil mindestens einen Zentimeter von dem transparenten Fenster (15) entfernt gelegen ist.

## Claims

1. Head-up display (2) for a motor vehicle (1) comprising, inside a housing (14):
- an image generation system (4);
- a first projection optical system (5a) comprising a first mirror (7a) and a second projection optical system (5b) comprising a second mirror (7b);
the housing (14) comprising an opening that is closed by a transparent window (15);
**characterized in that**:
- said image generation system (4) is designed to emit a first source light beam (9a) and a second source light beam (9b) that are spatially distinct from one another;
- said first projection optical system (5a) and said second projection optical system (5b) are designed to project said first source light beam (9a) and second source light beam (9b), respectively, outwardly through said transparent window (15), so as to form a first virtual image (10a) at a first projection distance and a second virtual image (10b) at a second projection distance in the field of view of a driver (3) of said motor vehicle (1);
- said second projection optical system (5b) is designed to be passed through by a second intermediate light beam (17b) originating from the second source light beam (9b);
- the first mirror (7a) is able, on the one hand, to intercept a portion (18) of the second intermediate light beam (17b) and, on the other hand, to reflect said portion (18) as a reflected portion (19);
- the head-up display (2) comprises a masking piece (6) interposed between the first mirror (7a) and the transparent window (15), and designed to stop said reflected portion (19).

2. Head-up display (2) according to Claim 1, wherein the first projection distance and the second projection distance are distinct.

3. Head-up display (2) according to Claim 2, wherein the first virtual image (10a) has dimensions greater than the dimensions of the second virtual image (10b) and the first projection distance is greater than the second projection distance.

4. Head-up display (2) according to any one of the preceding claims, furthermore comprising a separating piece (20) arranged between the first source light beam (9a) and the second source light beam (9b).

5. Head-up display (2) according to Claim 4, wherein:
- said first projection optical system (5a) is designed to be passed through by a first intermediate light beam (17a) originating from the first source light beam (9a);
- the separating piece (20) stops at least a portion of the first intermediate light beam (17a) oriented in the direction of the second mirror (7b).

6. Head-up display according to any one of the preceding claims, wherein the masking piece (6) is movable.

7. Head-up display (2) according to Claim 6, furthermore comprising a first control system (21) and wherein:
- the masking piece (6) is driven by a motor;
- said first control system (21) comprises:
∘ an acquisition device (21a) designed to determine the position of the eyes of a driver (3) of the motor vehicle (1)
∘ an electronic processing unit (21b) connected to the acquisition device (21a) and designed to compute a position of the masking piece (6)
∘ a servo-control system (21c) designed to servo-control the displacement of the motor to a setpoint in relation to the position computed by the electronic processing unit (21b).

8. Head-up display according to Claim 7, wherein:
- adjusting means are configured to modify the inclination of the second mirror (7b);
- the electronic processing unit (21b) is furthermore designed to compute an optimum inclination of the second mirror (7b);
- the servo-control system (21c) is furthermore designed to servo-control the actuation of said adjusting means to a prior setpoint in relation to the optimum inclination computed by the electronic processing unit (21b).

9. Head-up display (2) according to Claim 6, furthermore comprising a second control system (22) and wherein:
- the masking piece (6) is driven by a motor;
- the inclination of the second mirror (7b) is manually adjustable;
- said second control system (22) comprises:
- an electronic processing unit (22b) designed to receive information relating to the inclination of the second mirror (7b) and to compute a position of the masking piece (6);
- a servo-control system (22c) designed to servo-control the displacement of the motor to a setpoint in relation to the position computed by the electronic processing unit (22b).

10. Head-up display (2) according to Claim 6, wherein:
- the inclination of the second mirror (7b) is manually adjustable;
- the position of the masking piece (6) is manually adjustable.

11. Head-up display (2) according to any one of the preceding claims, wherein the masking piece is located less than one centimetre from the transparent window (15).
